# EUROPEAN PATENT APPLICATION

(11) **EP 2 047 752 A1**
(43) Date of publication of application: **15.04.2009**
(21) Application number: 07118248.9
(22) Date of filing: 10.10.2007
(51) Int. Cl.: A21D 8/04

(54) **Method for preparing a baked product**

(71) Applicant: Bakery Technology Centre B.V., 4845 CR Wagenberg (NL)
(72) Inventor: Tjeertes, Jan Gerrit Willem, 3135 JA Vlaardingen (NL); Sturkenboom, Marcellus Gerardus, 3991 PX Houten (NL); de Levita, Paul David, Dribergen-Rijsenburg (NL); van Duijnhoven, Antonius Adrianus Gerardus, 4845 CR Wagenberg (NL)
(74) Representative: Hatzmann, Martin

(57) **Abstract**

The invention is directed to a method for preparing a baked product, to a dough, to a baked product obtainable by said method, and to the use of a specific enzyme composition in the preparation of a baked product.
The method of the invention comprises preparing a dough, wherein said dough has a pH of 4.8 or less and comprises an enzyme composition comprising:
- a first enzyme being a protease; and
- a second enzyme being an amylolytic enzyme, which second enzyme retains substantial amylolytic activity pH values of 4.8 or less.

## Description

The invention is directed to a method for preparing a baked product, to a dough, to a baked product obtainable by said method, and to the use of a specific enzyme composition in the preparation of a baked product.

Breads prepared from dough with a relatively low pH, such as sourdough breads, are important bread varieties for instance in Germany, Poland, Czech Republic and in other Central or Eastern European countries. Such breads can comprise rye and/or wheat flour.

In a sourdough procedure leavening and flavour result from the addition of old dough in which lactic-acid-producing bacteria have developed. These micro-organisms ferment some of the carbohydrates in the fresh dough batch, producing characteristic sour tastes and odours. The acidic environment created by sourdough culture helps to strengthen the dough and produces lighter textured bread, which has better shelf-life properties.

The sourdough procedure is often applied to rye breads. Pure rye dough often produces very heavy textured bread. Consequently, some bakers add wheat flour to lighten the texture. In Germany, bread comprising a blend of rye flour and wheat flour is also referred to as "Mischbrot". Commonly, three classes of Mischbrot are distinguished: rye Mischbrot (with rye flour levels of 51-89 wt.%), wheat Mischbrot (with wheat levels of 51-89 wt.%), and Mischbrot (with about equal levels of rye flour and wheat flour). It is known that an increase of the rye flour content in the dough results in a bread with better moisture retention and therefore better freshkeeping characteristics and stronger taste. This effect becomes obvious when small percentages of rye flour are added to white bread formulations. On the other hand an increase of the wheat flour content in the dough leads to bread with better softness, better texture and a milder taste.

With regards to quality, it is known that breads prepared from dough having a relatively low pH, such as sourdough, lack quality in respect of moistness of the crumb, mouthfeel, softness, resilience of the crumb and shelf-life, typically after several days. This limited quality can be improved to a certain extent by the addition of hydrocolloids, such as gums. A hydrocolloid having particularly suitable properties is guar gum. Guar gum can be used to bind free water and it is capable of giving the dough a greater resiliency and a drier and less fluffy appearance.

Nevertheless, the addition of guar gum to a dough composition also leads to sticky dough and faster fungus growth, both being the result of relatively high water content in the dough. In addition, guar gum needs to be labelled, which is undesirable in the growing market for E-number free bread. Further, the quality improvement of baked products prepared from dough having a low pH by the addition of guar gum to the dough is limited.

There remains a need for quality improvement of low pH, preferably sourdough-based, baked products (made from rye, wheat-rye blends or wheat), preferably in the absence of hydrocolloids, such as guar gum.

Object of the invention is to improve the quality of baked products prepared from dough having a relatively low pH, such as sourdough.

It is in particular an object to improve the shelf-life of baked products prepared from dough having a relatively low pH.

The inventors recognised that the addition of enzymes commonly used in baking processes for improvement of moistness of the crumb, mouthfeel, softness, resilience of the crumb and shelf-life (such as Novamyl®, BAN® (bacterial amylase novo), Fungamyl®, Lipopan®, Bakezyme® MA 10 000, Bakezyme® AN 301, Powerbake®, Powerfresh®, Veron® Rye, Veron® Amylofresh, and Veron® 191) to the dough composition does not have a satisfactory effect, in particular on the shelf life of baked products prepared from dough having a relatively low pH.

The inventors now surprisingly found that the quality of a baked product prepared from dough having a relatively low pH can be remarkably improved by applying a specific enzyme composition in the baking process.

Accordingly, in a first aspect the invention is directed to a method for preparing a baked product comprising preparing a dough, wherein said dough has a pH of 4.8 or less and comprises an enzyme composition comprising_{:}
- a first enzyme being a protease; and
- a second enzyme being an amylolitic enzyme, which second enzyme retains substantial amylolytic activity at a pH value of 4.8 or less.

The inventors believe that the above-mentioned conventional enzymes fail to exhibit a positive effect on the moistness of the crumb, the mouthfeel, the softness, the resilience of the crumb and the shelf life in baked products prepared from dough having a relatively low pH, such as sourdough-based bread, because of the specific conditions for preparing such baked products, such as the low pH. In particular, when the baked product comprises rye, the baking process is relatively long. Furthermore, rye flour comprises high levels of pentosans (polysaccharides of pentose sugars), which can influence enzyme activity in bread baking.

The method of the invention results in a baked product, and in particular a sourdough-based baked product that has improved quality, and more in particular improved shelf-life, crumb moistness, crumb softness and mouthfeel. The inventors found that enzymes in the enzyme composition have a synergistic effect on the quality of the baked product. In addition, the inventors observed improved quality for baked products comprising rye flour and/or wheat flour.

Furthermore, the inventors found that a relatively small amount of the enzyme composition is required in the dough in order to obtain a qualitatively improved product.

In addition, the inventors found that the quality of the baked product obtainable by the method of the invention is improved, also in the absence of a hydrocolloid, such as guar gum. In fact, the properties of the baked product obtainable by the method of the invention in terms of softness, resilience and/or shelf life were found to be even better than baked products prepared with guar gum as additive instead of the enzyme composition.

The protease significantly improves the dough properties and the workability of the dough. The protease can for example be a neutral protease or endopeptidase prepared from *Bacillus subtilus.* In an embodiment, the protease is a protease from *Aspergillus oryzae,* or *Aspergillus niger.* Preferably, the protease is a protease from *Bacillus subtilus.* The protease can for instance be a peptidase according to E.C. 3.4.2, preferably E.C. 3.4.24.4.

The second enzyme retains substantial amylolytic activity at a pH of 4.8 or less, preferably at a pH of 4.6 or less, more preferably at a pH 4.2-4.6. The amylolytic activity is preferably substantially retained at a pH of 4.8 or less for at least part of the baking period. Preferably, the enzyme has substantially no amylolytic activity after the baking period. Residual enzyme activity after baking leads to excess starch breakdown, i.e. excess dextrination and this leads to an unacceptable wet and sticky bread crumb. The baking time is usually at least 20-30 minutes. During the baking process usually the dough temperatures of 25-40 °C will increase but the temperature of the bread crumb does not rise over 96 °C.

Substantial amylolytic activity is retained over a wide pH range, preferably in the range of pH 4-8, when as a result the fresh-keeping effect is substantially constant in this range. The skilled person will be able to determine whether an enzyme retains substantial amylolytic activity by carried out bread baking trials of the type as described in the Examples, in which the fresh-keeping effect is measured in breads made from doughs with different pHs and using the same dosage of enzyme on flour.

The second enzyme is an amylolitic enzyme, such as an amylase. It is preferred that the second enzyme is a maltogenic enzyme, such as a maltogenic amylase. The amylase can be an endo-amylase, preferably a bacterial endo-amylase, *e.g.* from *Bacillus.* A preferred example is a maltogenic α-amylase from *Bacillus stearothermophilus* strain.

A particularly preferred enzyme is a protein engineered maltogenic amylase originating from *Bacillus stearothermophilus* and which is produced by a genetically modified strain of *Bacillus subtilus.* This enzyme may be identified by E.C. 3.2.1.133. This enzyme hydrolyses predominantly 1,4-α-glucosidic linkages in amylose and amylopectin and produces mainly maltose and DP3 and DP4. The enzyme may additionally be capable of hydrolysing the 1,6-α-glucosidic linkages in amylopectin.

In a special embodiment of the invention, the enzyme composition can further comprise one or more enzymes selected from the group consisting of amylases (including maltogenic amylases), xylanases, glucose oxidases, mannanases, lipases (including phospholipases and glycolipases), pentosanases, cellulases (including hemicellulases), proteases, peptidases, amyloglucosidases, hexose oxidases, and transglutaminases.

A preferred enzyme composition is Rye Softase™, obtainable from IFT, The Netherlands, which comprises maltogenic amylase, amylase, xylanase, cellulase, glucose oxidase, amyloglucosidase, and protease.

The enzymes may be of microbial origin, such as of bacterial and/or fungal origin.

Suitable amylases include amylases of *Aspergillus oryzae* and of *Aspergillus niger.* Also suitable are bacterial amylases *e.g.* originating from *Bacillus amyloliquefaciens, Bacillus licheniformis, Bacillus thermoproteolyticus, Bacillus stearothermophilus.* A preferred bacterial amylase is amylase of *Bacillus subtilis.*

Suitable xylanases include fungal xylanases, such as xylanase of *Aspergillus oryzae, Aspergillus awamori, Trichoderma viride, Trichoderma reesei, Aspergillus foetidus,* and - preferably - of *Aspergillus niger.* Bacterial xylanase, *e.g.* of *Bacillus amyloliquefaciens, Bacillus licheniformis* and *Bacillus subtilis* are also suitable, of which *Bacillus subtilis* is preferred.

Glucose oxidase may for example be obtained from *Penicillium chrysogenum.* A preferred source is *Aspergillus niger.*

A preferred mannanase is mannanase of *Aspergillus niger.*

Suitable sources for lipases, such as phospholipases, include *Aspergillus niger, Rhizopus oryzae, Rhizopus oryzae, Rhizopus delemar, Candida,* and *Trichoderma reesei.* Very good results have been achieved with phospholipase and optionally lipase of *Aspergillus oryzae.*

Examples of pentosanases are those originating from *Humicola faecalis* and preferably from *Trichoderma reesei.*

Suitable cellulases include cellulase of *Trichoderma reesei, Trichoderma viride, Aspergillus oryzae* and *Aspergillus niger* of which *Aspergillus niger* is preferred.

Proteases and/or peptidases may be obtained *Aspergillus oryzae,* or *Aspergillus niger or Bacillus subtilus.* Preferably, proteases and/or peptidases are obtained from *Bacillus subtilus.*

Examples of amyloglucosidases are amyloglucosidases from *Rhizopus oryzae, Rhizopus delemar* and *Aspergillus niger,* of which *Aspergillus niger* is preferred.

Examples of suitable hexose oxidases are hexose oxidases from *Chondrus Crispus* that are expressed in *Hansenula polymorpha.*

Examples of suitable transglutaminases are transglutaminases from *Streptoverticillium spp.*

The use of additional enzymes in the dough, as mentioned above, allows providing the dough with excellent properties, including dough tolerance, fermentation tolerance, oven spring and gas retention. The total enzyme composition allows the preparation of qualitatively good bread with desirable volume and regular crumb structure. At the same time the enzymes ensure that the quality of the bread is less dependent on the flour quality, the baking process and baking conditions, as compared to bread lacking the enzymes.

It is further advantageous if the enzyme composition comprises a mixture of fungal and bacterial amylase. Fungal enzymes typically have a specific activity. Bacterial enzymes in addition have good heat stability.

In a further aspect, the invention is directed to a dough composition comprising an enzyme composition in accordance with the invention. Dough comprising the enzyme composition has excellent stability and handling properties, even at low pH values such as in the range of 4.0 to 5.0.

It is preferred that the dough composition is essentially free from hydrocolloids, such as guar gum and/or other gums. The term "essentially free from hydrocolloids" in the context of this invention is meant to refer to a dough composition that comprises at most 2 000 ppm (0.2 wt.%) hydrocolloids, preferably at most 1 000 ppm (0.1 wt.%) hydrocolloids, and most preferably no hydrocolloids.

The dough has a pH of less than 4.8, preferably less than 4.6, more preferably in the range of 4.2-4.6 as measured by using a glass-electrode, coupled to a pH meter placed into the dough and kept there for a few minutes (typically 2-5 minutes). At a pH of more than 4.8, the enzyme composition will have a negative effect on the bread-making process.

The acidification of a dough can be done by adding acids (such as citric, lactic and acetic acids), adding a starter culture (very high bacterial count) to a dough and let the dough ferment to form acids, or adding old dough some 20 wt.% or more from an old dough that is already acidic and most probably contains cultures.

Preferably, the dough comprises rye flour and/or wheat flour. In a special embodiment, the dough comprises, next to the rye flour, wheat flour. Any weight ratio between the rye flour and wheat flour can be used. The weight ratio can for instance be at least 11:89, such as at least 20:80 or at least 25:75. The upper limit of the weight ratio can for instance be at most 89:11, such as at most 70:30, or at most 50:50. A preferred range of the weight ratio between rye flour and wheat flour is from 20:80-40:60.

Optionally, the dough may comprise further types of flour, such as barley flour, buckwheat flour, corn flour, lima bean flour, oat flour, soybean flour, sorghum flour, potato flour and/or rice flour.

The dough of the invention can further comprise conventional ingredients such as water, yeast, salt (such as sodium chloride, calcium acetate, sodium sulphate and/or calcium sulphate), proteins (such as milk powder, gluten and/or soy), eggs (whole eggs, egg yolks or egg whites), antioxidants (such as ascorbic acid), oxidising agents (such as potassium bromate, potassium iodate, azodicarbonamide or ammonium persulphate), amino acids (such as L-cysteine), and sugar.

The mixing of the dough ingredients can be done by any means known in the art, *e*.*g*. by a straight dough method with acidulant or sourdough or preferment added to the dough.

The dough can be baked under conditions known in the art. A process according to the invention is in principle suitable for any kind of baked product, and in particular for bread.

The applied temperature in the baking process can be at least 85 °C, preferably at least 90 °C, and more preferably within the range of 90-95 °C. These elevated temperatures are typically applied for at least 10 minutes, preferably at least 15 minutes, and more preferably within the range of 15-20 minutes.

In a further aspect, the present invention is directed to a baked product obtainable by the method of the invention. The baked product may be in the form of a bread, preferably a rye bread, a rye-wheat bread, wheat-rye bread, or a wheat bread. The baked product of the invention is qualitatively better than a baked product prepared without the enzyme composition. More specifically, the shelf-life, softness, moistness, and/or resilience/springiness of the crumb are improved.

It is an advantage if the baked product is essentially free from guar gum, because this allows the production of "clean label" baked products in general and "clean label" Mischbrot in particular, since the labelling requirement for guar gum can in this way be overcome. In standard rye-wheat bread added guar gum needs to be labelled. This means that the indication E-412 appears on the label of the product. With the growing market for E-number free products this is not seen as beneficial. Guar replacement could therefore prevent the need for labelling.

In another aspect the invention is directed to the use of an enzyme composition in accordance with the invention as a preservative agent in a bread baking process. In particular, the invention is directed to the use of such an enzyme composition for improving the shelf-life of a bread.

### Examples

For the manufacture of bread a so-called Mischbrot with wheat flour T530 (70 wt.% of total flour), rye flour T930 (30 wt.% of total flour), water (63 wt.% based on total dough), compressed yeast (3 wt.% based on total dough Optimum ex AB Mauri), salt (1.8 wt.% based on total dough), sourdough powder (1.2 wt.% based on total dough Rogoferm ex Zeelandia, Poland), ascorbic acid (0.006 wt.% based on total dough), Rye Doughase™ (0.01 wt.% based on total dough ex IFT, The Netherlands)

**Processing**

| | |
|---|---|
| Kneading | : 4 min. slow and 3.5 min. fast speed in the spiral mixer |
| Dough temperature | : 26 °C |
| Dough weight | : 900 g a loaf |
| Bulk fermentation | : 5 min. at 22 °C room temperature |
| To round up by hand First proofing time | : 5 min. at 22 °C room temperature |

Mould and put the pieces in baskets and on plates.

| | |
|---|---|
| Final proofing time | : 55/65 min. at 34 °C and R.H. 80 % |
| Baking | : Loafs; 45 min. at 220 °C with steam |

*Following evaluations were done:*
- Dough handling : description from the subjective feeling from the baker
- Dough stability : 9 is stable, good gas retention 3 is unstable, collapsed dough
- Specific Volume in g/cm³ according to the rape seed replacement method
- Shape : 9 is excellent, round bread, nice split 3 is bad shape, small/flat bread, poor split
- Texture : description from the subjective view from the panel
- Softness (by panel) : 9 is very soft, silky/smooth 3 is very hard, dry/crumbly

The crumb firmness (or softness) was measured using a Stevens Texture Analyser (TA). Lower TA scores indicate softer and more silky/smooth bread crumb.

Two slices of 44 mm thickness from the centre of each loaf were tested by means of the texture analyser using a probe of 1.5 inch diameter, a compression depth of 8.8 mm (20 %) and at a rate of compression of 0.5 mm/sec.

### Example 1

| | test 1 | test 2 | test 3 |
|---|---|---|---|
| Rye Softase^{™} | 100 ppm | 0 | 0 |
| Guar gum | 0 | 0 | 2 000 ppm |
| | | | |
| Dough handling | good | good | good |

| Dough stability | 8 | 7% | 8 |
|---|---|---|---|
| Loaf volume in g/cm³ | 3.71 | 3.65 | 3.68 |
| Texture | regular | irregular | regular |
| | open | open | open |
| Softness (determined by expert panel) | | | |
| day 2 | 10 | 6 | 8 |
| day 5 | 8 | 3 | 4 |
| Texture analyser (see Figure 1) | | | |
| day 2 | 420 | 850 | 670 |
| day 5 | 640 | 1010 | 950 |

### Example 2

| | | | | | | |
|---|---|---|---|---|---|---|
| | test 1 | | test 2 | | test 3 | |
| pH dough | 5.1 | | 4.8 | | 4.6 | |
| Sourdough powder | 0.6 % | | 0.9 % | | 1.2 % | |
| | | | | | | |
| Dough handling | Weak/sticky | | good | | good | |
| Fermentation time in min | 55 | 65 | 55 | 65 | 55 | 65 |
| Dough stability | 5 | 3 | 8 | 7 | 8 | 8 |
| Loaf volume in g/cm³ (see Figure 2) | 3.34 | 3.06 | 3.85 | 3.78 | 3.95 | 4.12 |
| Texture | coarse | very coarse | fine | rather fine | fine | rather fine |
| | open | open | closed | rather closed | closed | rather closed |
| Softness | Not applicable due to volume differences | | | | | |

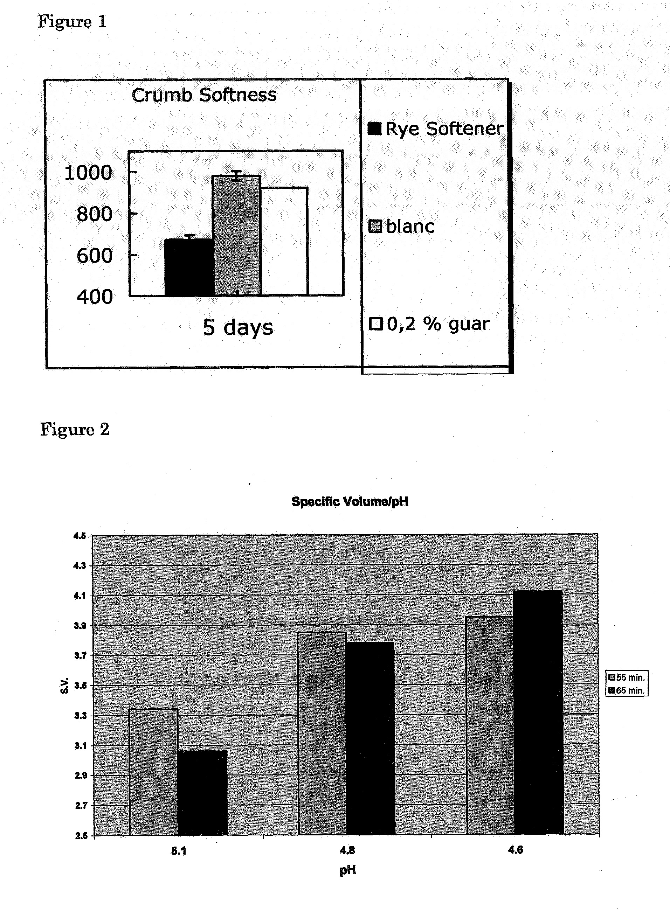

Figure 1 shows the crumb softness after 5 days. The dark grey column represents Mischbrot with rye softener according to the invention (Rye Softase™, the light grey column represents Mischbrot without addition, the white column represents Mischbrot with 2 % guar gum.

Figure 2 shows the specific volume of the bread at different pH values. The light grey column show the results after 55 min fermentation time, the dark gray columns show the results after 65 min fermentation time.

## Claims

1. Method for preparing a baked product comprising preparing a dough, wherein said dough has a pH of 4.8 or less and comprises an enzyme composition comprising:
- a first enzyme being a protease; and
- a second enzyme being an amylolitic enzyme, which second enzyme retains substantial amylolytic activity pH values of 4.8 or less.

2. Method according to claim 1, wherein the pH said dough is 4.6 or less, preferably in the range of 4.2-4.6.

3. Method according to claim 1 or 2, wherein said second enzyme is an amylase.

4. Method according to any one of the preceding claims, wherein said second enzyme is a maltogenic enzyme, such as a maltogenic amylase.

5. Method according to any one of the preceding claims, wherein said second enzyme retains substantial activity at a pH of 4.8 or less, preferably pH of 4.6 or less, and most preferably at a pH of 4.2-4.6.

6. Method according to any one of the preceding claims, wherein said second enzyme is at least capable of hydrolysing 1,4-α-glucosidic linkages in amylose and amylopectin.

7. Method according to any one of the preceding claims, wherein said enzyme composition further comprises one or more enzymes selected from the group consisting of amylases, xylanases, glucose oxidases, mannanases, lipases, pentosanases, cellulases, proteases, peptidases, amyloglucosidases, hexose oxidases, and transglutaminases.

8. Method according to claim 8, wherein said enzyme composition comprises maltogenic amylase, amylase, xylanase, cellulase, glucose oxidase, amyloglucosidase, and protease.

9. Method according to any one of the preceding claims, wherein said dough is a sourdough.

10. Method according to any one of the preceding claims, wherein the dough comprises rye flour, and/or wheat flour.

11. Method according to any one of the preceding claims, wherein the dough comprises rye flour and wheat flour and the weight ratio between rye flour and wheat flour in the dough is at least 11:89, preferably at least 20:80, such as in the range of 20:80-50:50, preferably in the range of 20:80-40:60.

12. Method according to any one of the preceding claims, comprising adding lactic-acid-producing bacteria to said dough.

13. Method according to any one of the preceding claims, comprising at least one acidulant to said dough.

14. A dough composition comprising the enzyme composition defined in any one of claims 1-9.

15. Baked product obtainable by a method according to any one of claims 1-13.

16. Baked product according to claim 16 in the form of a rye bread, a rye-wheat bread, or wheat-rye or a wheat bread.

17. Use of an enzyme composition as defined in any of claims 1-9 as a bread crumb softener in a rye bread or rye-wheat bread baking process.
